# EUROPÄISCHE PATENTSCHRIFT

(11) **EP 2 885 145 B1**
(45) Veröffentlichungstag und Bekanntmachung des Hinweises auf die Patenterteilung: **07.02.2018**
(21) Anmeldenummer: 13742469.3
(22) Anmeldetag: 01.08.2013
(51) Int. Cl.: B60K 1/02, B60K 6/365, B60K 6/547, F16H 3/66, F16H 3/12, F16H 61/686, F16H 61/04

(54) **AUTOMATIKHYBRIDGETRIEBE**
AUTOMATIC HYBRID TRANSMISSION
TRANSMISSION AUTOMATIQUE HYBRIDE

(30) Priorität: 20.08.2012 DE 102012214743
(43) Veröffentlichungstag der Anmeldung: 24.06.2015
(73) Patentinhaber: Bayerische Motoren Werke Aktiengesellschaft, 80809 München (DE)
(72) Erfinder: KLUGE, Benjamin, 81827 München (DE); OHNEMUS, Ulrich, 82285 Hattenhofen (DE)
(86) Internationale Anmeldenummer: PCT/EP2013/066141
(87) Internationale Veröffentlichungsnummer: WO 2014/029595

(56) Entgegenhaltungen:
- EP-A2- 2 052 933
- DE-A1- 10 021 025
- DE-A1- 19 606 771
- DE-A1-102004 042 007
- DE-A1-102007 042 949
- DE-A1-102008 000 203
- DE-A1-102008 010 309
- DE-A1-102008 032 320
- DE-A1-102008 055 626
- FR-A1- 2 912 696
- US-A1- 2010 029 436
- US-A1- 2012 071 289

## Beschreibung

Die vorliegende Erfindung betrifft ein Automatikhybridgetriebe gemäß dem Oberbegriff des Patentanspruches 1.

Ein derartiges Automatikhybridgetriebe ist aus der DE 10 2004 042 007 A1 bekannt. Zum technischen Hintergrund der Erfindung zählen die US 2010 029436 A1, DE 100 21 025 A1, EP 2 052 933 A2, DE 10 2007 042 949 A1, DE 10 2008 000 203 A1, DE 10 2008 010 309 A1, FR 2 912 696 A1 sowie die DE 19 606 771 A1. Aus der DE 10 2008 055 626 A1 oder auch aus der US 2012/071289 A1 sind jeweils Automatikgetriebe mit den in Anspruch 1 beanspruchten Radsätzen und Schaltelementen bekannt, jedoch ohne elektrische Maschinen und somit nicht als Automatikhybridgetriebe ausgeprägt.

Aktuelle Fahrzeughybridgetriebe basieren üblicherweise auf einem bestehenden Automatikgetriebe, wobei eine elektrische Maschine zwischen dem Verbrennungsmotor des Fahrzeugs und dem Eingang des Automatikgetriebes angeordnet ist (sogenannter "P2-Hybrid"). Bei einem derartigen Hybridkonzept ist die Funktionsweise des Automatikgetriebes nach wie vor unabhängig von der elektrischen Maschine bzw. die elektrische Maschine bringt keinerlei Vorteile in Bezug auf das Automatikgetriebe.

Bei Hybridfahrzeugen eingesetzte Automatikgetriebe sind üblicherweise "lastschaltbare Automatikgetriebe", die meistens als "Planetenkuppelgetriebe" ausgeführt sind. Bei derartigen Getrieben werden die einzelnen Gangstufen durch Schließen bzw. Öffnen reibschlüssiger Schaltelemente eingelegt, was naturgemäß mit gewissen Reib- bzw. Schleppverlusten verbunden ist und eine aufwändige elektrohydraulische Steuerung der Schaltelemente erfordert.

Aufgabe der Erfindung ist es, ein Automatikhybridgetriebe zu schaffen, bei dem die oben beschriebenen Nachteile vermieden werden.

Diese Aufgabe wird durch die Merkmale des Patentanspruches 1 gelöst. Vorteilhafte Ausgestaltungen und Weiterbildungen der Erfindung sind in den Unteransprüchen zu entnehmen.

Ausgangspunkt der Erfindung ist ein Automatikgetriebe, bei dem in das Getriebe an sich (als integraler Bestandteil des Getriebes) zwei elektrische Maschinen integriert sind, wobei das Automatikgetriebe ausschließlich formschlüssige Schaltelemente aufweist. Jedem der formschlüssigen Schaltelemente sind zwei "Getriebeelemente" (z. B. Gehäuse, Welle, o.ä.) zugeordnet. Durch Schließen eines Schaltelements können die beiden dem Schaltelement zugeordneten Getriebeelemente gekoppelt, insbesondere drehgekoppelt werden.

Der Kern der Erfindung besteht darin, dass zum Einlegen eines Zielganges (d. h. eines Ganges in den geschaltet werden soll) mindestens eines der formschlüssigen Schaltelemente geschlossen wird, wobei die dem mindestens einen zu schließenden Schaltelement zugeordneten Getriebeelemente vor dem Schließen durch geeignetes Ansteuern mindestens einer der beiden elektrischen Maschinen oder beider elektrischer Maschinen synchronisiert werden. Auf aufwändige mechanische Synchronisiereinrichtungen, wie sie z. B. von Handschaltgetrieben bekannt sind, kann verzichtet werden. Die zu schließenden Schaltelemente können also insbesondere ausschließlich durch entsprechendes Ansteuern mindestens einer der beiden elektrischen Maschinen synchronisiert werden.

Ein Automatikhybridgetriebe gemäß der Erfindung kann beispielsweise neun Vorwärtsgänge und einen Rückwärtsgang aufweisen. Ein derartiges Getriebe kann z.B. vier in einer Axialrichtung hintereinander angeordnete Planetenradsätze aufweisen. Jeder der Planetenradsätze weist
- ein Sonnenrad,
- ein Hohlrad,
- mindestens ein mit dem zugeordneten Sonnenrad und dem zugeordneten Hohlrad kämmendes Planetenrad auf, und
- einen drehbar angeordneten Planetenträger auf, auf dem wiederum das mindestens eine Planetenrad drehbar gelagert ist.

Ein erfindungsgemäßes Getriebe weist ferner genau zwei elektrische Maschinen auf, die im Folgenden als "erste elektrische Maschine" bzw. als "zweite elektrische Maschine" bezeichnet werden. Jede der beiden elektrischen Maschinen weist einen Rotor und einen Stator auf. Es kann vorgesehen sein, dass jede der beiden elektrischen Maschinen gegenüber einem Gehäuse des Automatikhybridgetriebes abgestützt ist, d. h. der Stator wäre dann mit dem Gehäuse des Automatikhybridgetriebes verbunden. Jede der beiden elektrischen Maschinen ist zum Antreiben mindestens eines Getriebeelements des Automatikhybridgetriebes vorgesehen.

Im Folgenden wird die Erfindung im Zusammenhang mit der Zeichnung näher erläutert. Es zeigen:

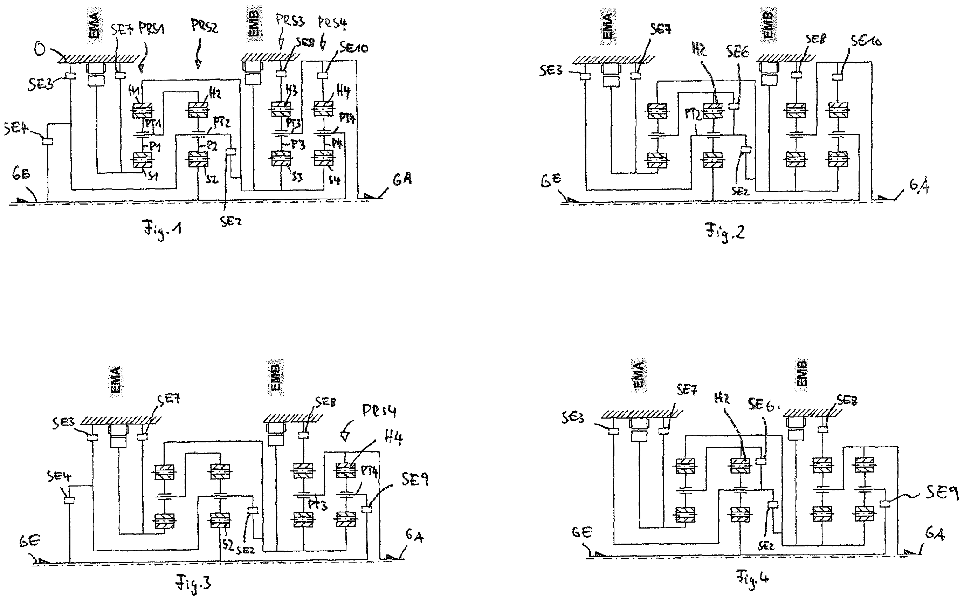

- Figuren 1 - 8: verschiedene Ausführungsbeispiele eines Automatikhybridgetriebes gemäß der Erfindung.

Die in den Figuren 1 bis 8 dargestellten Automatikhybridgetriebe sind sehr ähnlich aufgebaut und weisen dementsprechend vielfältige Gemeinsamkeiten auf. Funktionsgleiche Komponenten sind mit denselben Bezugszeichen versehen und brauchen daher nicht im Zusammenhang mit jeder einzelnen Figur erläutert bzw. wiederholt werden.

Sämtliche der in Figur 1 - 8 gezeigten Automatikhybridgetriebe weisen vier Planetenradsätze PRS1, PRS2, PRS3 und PRS4 auf, die, in Richtung von einer Getriebeeingangswelle GE zu einer Getriebeausgangswelle GA betrachtet, in vier Planetenradsatzebenen hintereinander angeordnet sind.

Der Planetenradsatz PRS1 weist ein Sonnenrad S1, ein Hohlrad H1 sowie mehrere Planetenräder auf, von denen hier jeweils nur ein Planetenrad P1 dargestellt ist. Das Planetenrad P1 kämmt mit dem Sonnenrad S1 und dem Hohlrad H1. Es ist auf einem Planetenträger PT1 drehbar gelagert. Der Planetenträger PT1 selbst ist ebenfalls drehbar angeordnet.

Das Sonnenrad S1 ist mit einem Rotor einer ersten elektrischen Maschine EMA drehgekoppelt. Der Stator der ersten elektrischen Maschine EMA ist fest mit einem Gehäuse 0 des Automatikhybridgetriebes verbunden. Durch Schließen eines Schaltelements SE7 kann das Sonnenrad S1 des ersten Planetenradsatzes PR1 und somit der Rotor der ersten elektrischen Maschine EMA in Bezug auf das Gehäuse 0 festgestellt werden.

Der zweite Planetenradsatz PRS2 weist ein Sonnenrad S2, ein Hohlrad H2 und mehrere Planetenräder auf, von denen hier lediglich das Planetenrad P2 dargestellt ist. Das Planetenrad P2 ist drehbar auf einem zugeordneten Planetenträger PT2, der selbst wiederum drehbar angeordnet ist, angeordnet. Die Planetenräder P2 kämmen mit dem zugeordneten Sonnenrad S2 und dem zugeordneten Hohlrad H2.

Wie aus Figur 1 ersichtlich ist, ist das Hohlrad H2 permanent fest mit Planetenträger PT1 des ersten Planetenradsatzes PRS1 gekoppelt. Der Planetenträger PT2 des zweiten Planetenradsatzes PRS2 kann durch Schließen eines Schaltelements SE3 in Bezug auf das Gehäuse 0 festgestellt werden. Durch Schließen eines Schaltelements SE4 kann der Planetenträger PT2 des zweiten Planetenradsatzes PRS2 mit der Getriebeeingangswelle GE drehgekoppelt werden.

Der dritte Planetenradsatz PRS3 weist ein Sonnenrad S3, ein Hohlrad H3 sowie mit dem Sonnenrad S3 und dem Hohlrad H3 kämmende Planetenräder auf, von denen hier nur das Planetenrad P3 dargestellt ist. Die Planetenräder P3 sind auf einem Planetenträger PT3 drehbar gelagert. Das Hohlrad H3 des dritten Planetenradsatzes PRS3 kann durch Schließen eines Schaltelements SE8 in Bezug auf das Gehäuse 0 des Automatikhybridgetriebes festgestellt werden.

Wie aus Figur 1 ersichtlich ist, ist das Sonnenrad S3 des dritten Planetenradsatzes PRS3 permanent mit einem Rotor einer zweiten elektrischen Maschine EMB verbunden. Ein Stator der zweiten elektrischen Maschine EMB ist fest mit dem Gehäuse 0 verbunden. Das Sonnenrad S3 des dritten Planetenradsatzes PRS3 ist nicht nur mit dem Rotor der zweiten elektrischen Maschine EMB, sondern auch mit dem Hohlrad H1 des ersten Planetenradsatzes PRS1 permanent drehgekoppelt.

Desweiteren ist das Sonnenrad S3 des dritten Planetenradsatzes PRS3 permanent mit einem Sonnenrad S4 des vierten Planetenradsatzes PRS4 drehgekoppelt. Ferner ist ein Schaltelement SE2 vorgesehen. Durch Schließen des Schaltelements SE2 kann das Sonnenrad S3, welches permanent mit dem Sonnenrad S4 und dem Rotor der zweiten elektrischen Maschine EMB sowie mit dem Hohlrad H1 drehgekoppelt ist, mit dem Planetenträger PT2 des zweiten Planetenradsatzes PRS2 drehgekoppelt werden.

Der vierte Planetenradsatz PRS4 weist ein Sonnenrad S4, ein Hohlrad H4 sowie mit dem Sonnenrad S4 und dem Hohlrad H4 kämmende Planetenräder auf, von denen hier nur das Planetenrad P4 dargestellt ist. Das Planentenrad P4 ist drehbar auf einem zugeordneten Planetenträger PT4 gelagert. Durch Schließen eines Schaltelements SE10 kann bei den Ausführungsbeispielen der Figuren 1, 2 sowie 5, 6 das Hohlrad H4 des vierten Planetenradsatzes PRS4 mit der Getriebeausgangswelle GA drehgekoppelt werden. Da der Planetenträger PT3 des dritten Planetenradsatzes PRS3 permanent mit der Getriebeausgangswelle GA drehgekoppelt ist, kann durch Schließen des Schaltelements SE10 das Hohlrad H4 auch mit dem Planetenträger PT3 drehgekoppelt werden.

Bei allen Ausführungsbeispielen ist der Planetenträger PT4 permanent mit dem Sonnenrad S2 des zweiten Planentenradsatzes PRS2 und somit mit der Getriebeeingangswelle GE drehgekoppelt.

Wie bereits erwähnt, ist ferner das Sonnenrad S4 bei allen Ausführungsbeispielen permanent mit dem Sonnenrad S3, mit dem Rotor der zweiten elektrischen Maschine EMB und dem Hohlrad H1 des ersten Planetenradsatzes PRS1 drehgekoppelt.

Das Ausführungsbeispiel der Figur 2 unterscheidet sich von dem der Figur 1 dadurch, dass das Schaltelement SE4 fortgelassen wurde. Im Unterschied zum Ausführungsbeispiel der Figur 1 ist hier keine Kopplung des Planetenträges PT2 und der Getriebeeingangswelle GE möglich.

Das Ausführungsbeispiel der Figur 3 unterscheidet sich von dem der Figur 1 durch ein zusätzliches Schaltelement SE9, über das die Getriebeeingangswelle GE bzw. das Sonnenrad S2 des zweiten Planetenradsatzes PRS2 mit den Planetenträger PT4 des vierten Planetenradsatzes PRS4 koppelbar ist. Durch Öffnen des Schaltelements SE9 kann der Planetenträger PT4 von der Getriebeeingangswelle GE und von dem Sonnenrad S2 entkoppelt werden.

Ferner ist beim Ausführungsbeispiel der Figur 3 das Hohlrad H4 permanent mit dem Planetenträger PT3 des dritten Planetenradsatzes PRS3 und mit der Getriebeausgangswelle GA gekoppelt.

Das Ausführungsbeispiel der Figur 4 unterscheidet sich von dem der Figur 2 durch das zusätzliche Schaltelement SE9 sowie durch den Entfall des Schaltelements SE10, wodurch, analog Figur 3, der Planetenträger PT3 permanent mit dem Hohlrad H4 und der Getriebeausgangswelle GA gekoppelt ist.

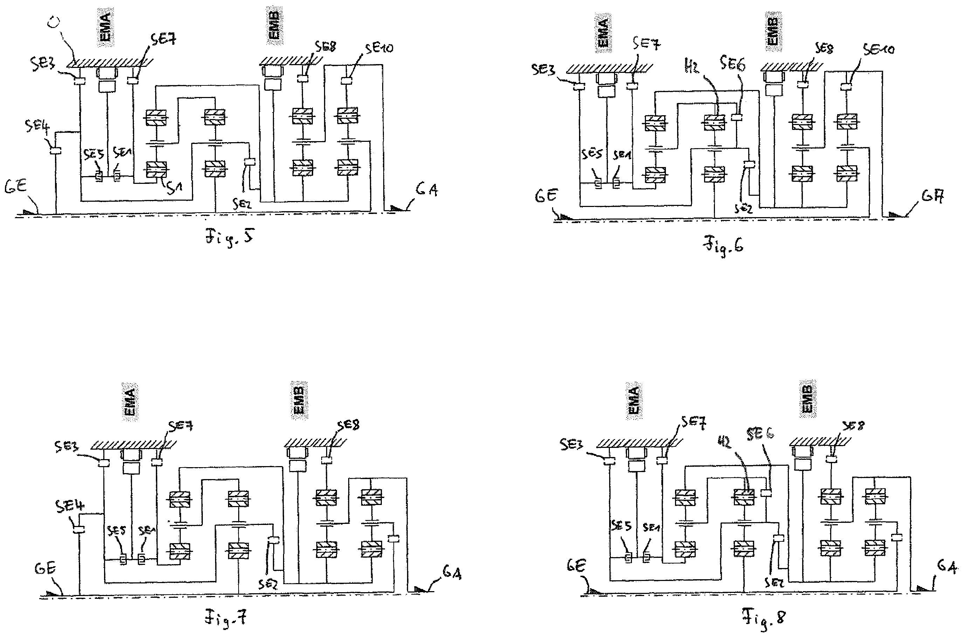

Die Ausführungsbeispiele der Figuren 5 -8 sind aus denen der Figuren 1 - 4 abgeleitet, wobei Figur 5 aus Figur 1, Figur 6 aus Figur 2, Figur 7 aus Figur 3 und Figur 8 aus Figur 4 abgeleitet ist. Der wesentliche Unterschied der Figuren 5 - 8 gegenüber den Figuren 1 - 4 besteht in zwei zusätzlichen Schaltelementen SE1 und SE5.

Das Schaltelement S1 ermöglicht eine Kopplung bzw. Entkopplung des Rotors der ersten elektrischen Maschine EMA von dem Sonnenrad S1 des ersten Planetenradsatzes PRS1. Das Schaltelement SE5 ermöglicht eine Kopplung des Rotors der ersten elektrischen Maschine EMA mit dem Gehäuse 0 und zwar unabhängig von dem Schaltzustand der Schaltelemente SE1 und SE7. Anders ausgedrückt, kann der Rotor der ersten elektrischen Maschine EMA wahlweise durch Schließen der Schaltelemente SE3 und SE5 oder SE1 und SE7 mit dem Gehäuse 0 gekoppelt werden.

Sämtliche in den Figuren 1 - 8 gezeigten Schaltelemente SE1 - SE10 können, wie bereits erwähnt, als formschlüssige Schaltelemente ausgebildet sein.

Wie den Figuren 1 - 8 zu entnehmen ist, gibt es für die Platzierung der ersten elektrischen Maschine EMA zwei Varianten. Bei den Ausführungsbeispielen der Figuren 1 - 4 ist der Rotor der ersten elektrischen Maschine EMA permanent fest mit dem Sonnenrad S1 der ersten Planetenradsatzes PRS1 gekoppelt. Diese Konfiguration ermöglicht es, zwischen allen benachbarten Vorwärtsgängen zu schalten. Desweiteren sind noch verschiedene Doppelschaltungen möglich. Der mechanische Rückwärtsgang lässt sich bei dieser Variante nicht schalten. Stattdessen besteht die Möglichkeit, rein elektrisch rückwärts zu fahren oder einen über die elektrischen Maschinen EMA, EMB gestützten Rückwärtsgang dazustellen.

Bei den in den Figuren 5 - 8 dargestellten Ausführungsbeispielen lässt sich über die Schaltelemente SE1 und SE5 die erste elektrische Maschine EMA wahlweise mit dem Sonnenrad S1 des ersten Planetenradsatzes PRS2 oder mit dem Planetenträger PT2 des zweiten Planetenradsatzes koppeln. Durch die "Umkoppelbarkeit" der ersten elektrischen Maschine EMA ergeben sich zusätzliche Schaltmöglichkeiten gegenüber den in den Figuren 1 - 4 dargestellten Ausführungsbeispielen. So lässt sich der mechanische Rückwärtsgang über die elektrischen Maschinen EMA, EMB synchronisieren und nutzen. Desweiteren ergeben sich mehrere Direktschaltmöglichkeiten aus dem höchsten Over-Drive-Gang. So kann vor allem schnell in einen zugkraftaufbauenden Gang zurückgeschaltet werden. Eine Umkopplung der elektrischen Maschine EMA von der einen Welle auf die andere Welle stellt im höchsten Gang auch kein Problem dar, da in diesem Gang die beiden in Frage kommenden Wellen stillstehen.

## Patentansprüche

1. Automatikhybridgetriebe mit
• genau vier in einer Axialrichtung hintereinander angeordneten Planetenradsätzen (PRS1 - PRS4), nämlich, in Richtung von einer Getriebeeingangswelle (GE) zu einer Getriebeausgangswelle (GA) betrachtet, einem ersten Planetenradsatz (PRS1), einem in Axialrichtung nach dem ersten Planetenradsatz (PRS1) angeordneten zweiten Planetenradsatz (PRS2), einem in Axialrichtung nach dem zweiten Planetenradsatz (PRS2) angeordneten dritten Planetenradsatz (PRS3) und einem in Axialrichtung nach dem dritten Planetenradsatz (PRS3) angeordneten vierten Planetenradsatz (PRS4), wobei die Planetenradsätze (PRS1 - PRS4) jeweils
▪ ein Sonnenrad (S1 - S4),
▪ ein Hohlrad (H1 - H4) und
▪ mindestens ein mit dem zugeordneten Sonnenrad (S1 - S4) und dem zugeordneten Hohlrad (H1 - H4) kämmendes Planetenrad (P1 - P4) aufweisen, welches jeweils auf einem zugeordneten Planetenradträger (PT1 - PT4) drehbar gelagert ist, und
• genau einer ersten und einer zweiten elektrischen Maschine (EMA, EMB), wobei jede der elektrischen Maschinen (EMA, EMB) gegenüber einem Gehäuse (0) des Automatikhybridgetriebes abgestützt und zum Antreiben mindestens eines Getriebeelements des Automatikhybridgetriebes vorgesehen ist, wobei die Getriebeausgangswelle (GA) permanent mit einem Planetenträger (PT3) des dritten Planetenradsatzes (PRS3) drehgekoppelt ist, und
wobei das Hohlrad (H3) des dritten Planetenradsatzes (PRS3) über ein achtes Schaltelement (SE8) in Bezug auf das Gehäuse (0) feststellbar ist, **dadurch gekennzeichnet, dass**
• die Getriebeeingangswelle (GE) permanent mit einem Sonnenrad (S2) des zweiten Planetenradsatzes (PRS2) drehgekoppelt ist,
• die erste elektrische Maschine (EMA) über ein erstes Schaltelement (SE1) mit dem Sonnenrad (S1) des ersten Planetenradsatzes (PRS1) drehkoppelbar ist oder permanent mit dem Sonnenrad (S1) des ersten Planetenradsatzes (PRS1) drehgekoppelt ist,
• ein Hohlrad (H1) des ersten Planetenradsatzes (PRS1) permanent mit der zweiten elektrischen Maschine (EMB) drehgekoppelt ist,
• das Hohlrad (H1) des ersten Planetenradsatzes (PRS1) permanent mit dem Sonnenrad (S3) des dritten Planetenradsatzes (PRS3) und mit dem Sonnenrad (S4) des vierten Planetenradsatzes (PRS4) drehgekoppelt ist,
• das Hohlrad (H1) des ersten Planetenradsatzes (PRS1) über ein zweites Schaltelement (SE2) mit dem Planetenträger (PT2) des zweiten Planetenradsatzes (PRS2) drehkoppelbar ist,
• der Planetenträger (PT2) des zweiten Planetenradsatzes (PRS2) über ein drittes Schaltelement (SE3) in Bezug auf das Gehäuse (0) feststellbar ist,
• der Planetenträger (PT1) des ersten Planetenradsatzes (PRS1) permanent mit dem Hohlrad (H2) des zweiten Planetenradsatzes (PRS2) drehgekoppelt ist, und
• das Sonnenrad (S1) des ersten Planetenradsatzes (PRS1) über ein siebtes Schaltelement (SE7) in Bezug auf das Gehäuse (0) feststellbar ist.

2. Automatikhybridgetriebe nach Anspruch 1, **dadurch gekennzeichnet, dass** der Planetenträger (PT2) des zweiten Planetenradsatzes (PRS2) über ein viertes Schaltelement (SE4) mit der Getriebeeingangswelle (GE) drehkoppelbar ist.

3. Automatikhybridgetriebe nach einem der Ansprüche 1 oder 2, **dadurch gekennzeichnet, dass** der Planetenträger (PT2) des zweiten Planetenradsatzes (PRS2) über ein fünftes Schaltelement (SE5) mit der ersten elektrischen Maschine (EMA) drehkoppelbar ist.

4. Automatikhybridgetriebe nach einem der Ansprüche 1 bis 3, **dadurch gekennzeichnet, dass** der Planetenträger (PT1) des ersten Planetenradsatzes (PRS1) über ein sechstes Schaltelement (SE6) mit dem Planetenträger (PT2) des zweiten Planetenradsatzes (PRS2) drehkoppelbar ist.

5. Automatikhybridgetriebe nach einem der Ansprüche 1 bis 4, **dadurch gekennzeichnet, dass** die Getriebeeingangswelle (GE) über ein neuntes Schaltelement (SE9) mit dem Planetenträger (PT4) des vierten Planetenradsatzes (PRS4) drehkoppelbar ist.

6. Automatikhybridgetriebe nach einem der Ansprüche 1 bis 5, **dadurch gekennzeichnet, dass** das Hohlrad (H4) des vierten Planetenradsatzes (PRS4) über ein zehntes Schaltelement (SE10) mit der Getriebeausgangswelle (GA) drehkoppelbar ist.

## Claims

1. An automatic hybrid transmission having
• exactly four planetary gear sets (PRS1 - PRS4) arranged in series in an axial direction, namely, viewed in the direction from a transmission input shaft (GE) to a transmission output shaft (GA), a first planetary gear set (PRS1), a second planetary gear set (PRS2) arranged in the axial direction after the first planetary gear set (PRS1), a third planetary gear set (PRS3) arranged in the axial direction after the second planetary gear set (PRS2) and a fourth planetary gear set (PRS4) arranged in the axial direction after the third planetary gear set (PRS3), wherein the planetary gear sets (PRS1 - PRS4) have in each case
• a sun gear (S1 - S4),
• a ring gear (H 1 - H4) and
• at least one planet gear (P1 - P4) which meshes with the associated sun gear (S1 - S4) and the associated ring gear (H1 - H4), which planet gear is rotatably mounted in each case on an associated planet carrier (PT1 - PT4), and
• exactly one first and one second electric machine (EMA, EMB), wherein each of the electric machines (EMA, EMB) is supported relative to a housing (0) of the automatic hybrid transmission and is provided for driving at least one transmission element of the automatic hybrid transmission,
wherein the transmission output shaft (GA) is permanently rotationally coupled with a planet carrier (PT3) of the third planetary gear set (PRS3), and
wherein the ring gear (H3) of the third planetary gear set (PRS3) can be fixed in relation to the housing (0) by means of an eighth shift element (SE8),
**characterised in that**
• the transmission input shaft (GE) is permanently rotationally coupled with a sun gear (S2) of the second planetary gear set (PRS2),
• the first electric machine (EMA) can be rotationally coupled with the sun gear (S1) of the first planetary gear set (PRS1) or is permanently rotationally coupled with the sun gear (S1) of the first planetary gear set (PRS1) by means of a first shift element (SE1),
• a ring gear (H1) of the first planetary gear set (PRS1) is permanently rotationally coupled with the second electric machine (EMB),
• the ring gear (H1) of the first planetary gear set (PRS1) is permanently rotationally coupled with the sun gear (S3) of the third planetary gear set (PRS3) and with the sun gear (S4) of the fourth planetary gear set (PRS4),
• the ring gear (H1) of the first planetary gear set (PRS1) can be rotationally coupled with the planet carrier (PT2) of the second planetary gear set (PRS2) by means of a second shift element (SE2),
• the planet carrier (PT2) of the second planetary gear set (PRS2) can be fixed in relation to the housing (0) by means of a third shift element (SE3),
• the planet carrier (PT1) of the first planetary gear set (PRS1) is permanently rotationally coupled with the ring gear (H2) of the second planetary gear set (PRS2), and
• the sun gear (S1) of the first planetary gear set (PRS1) can be fixed in relation to the housing (0) by means of a seventh shift element (SE7).

2. An automatic hybrid transmission according to Claim 1, **characterised in that** the planet carrier (PT2) of the second planetary gear set (PRS2) can be rotationally coupled with the transmission input shaft (GE) by means of a fourth shift element (SE4).

3. An automatic hybrid transmission according to one of Claims 1 or 2, **characterised in that** the planet carrier (PT2) of the second planetary gear set (PRS2) can be rotationally coupled with the first electric machine (EMA) by means of a fifth shift element (SE5).

4. An automatic hybrid transmission according to one of Claims 1 to 3, **characterised in that** the planet carrier (PT1) of the first planetary gear set (PRS1) can be rotationally coupled with the planet carrier (PT2) of the second planetary gear set (PRS2) by means of a sixth shift element (SE6).

5. An automatic hybrid transmission according to one of Claims 1 to 4, **characterised in that** the transmission input shaft (GE) can be rotationally coupled with the planet carrier (PT4) of the fourth planetary gear set (PRS4) by means of a ninth shift element (SE9).

6. An automatic hybrid transmission according to one of Claims 1 to 5, **characterised in that** the ring gear (H4) of the fourth planetary gear set (PRS4) can be rotationally coupled with the transmission output shaft (GA) by means of a tenth shift element (SE10).

## Revendications

1. Boîte de vitesses hybride automatique comprenant :
- exactement quatre trains de roues planétaires (PRS1-PRS4), montés l'un derrière l'autre en direction axiale, à savoir, dans la direction allant de l'arbre d'entrée (GE) à l'arbre de sortie (GA) de la boîte de vitesses, un premier train de roues planétaires (PRS1), un second train de roues planétaires (PRS2) monté après le premier train de roues planétaires (PRS 1) dans la direction axiale, un troisième train de roues planétaires (PRS3) monté après le second train de roues planétaires (PRS2) dans la direction axiale et un quatrième train de roues planétaires (PRS4) monté après le troisième train de roues planétaires (PRS3) dans la direction axiale, chacun des trains de roues planétaires (PRS1-PRS4) comprenant :
- une roue solaire (S1-S4),
- une couronne de train planétaire (H1-H4), et
- au moins une roue planétaire (P1-P4) engrenant avec la roue solaire (S1-S4) associée et avec la couronne de train planétaire (H1-H4) associée, et qui est respectivement montée mobile en rotation sur un porte roue planétaire (PT1-PT4) associé, et
- exactement un premier et un second moteurs électriques (EMA, EMB), chacun de ces moteurs électriques (EMA-EMB) s'appuyant contre un boîtier (0) de la boîte de vitesses hybride automatique et étant réalisé pour entraîner au moins un élément de transmission de cette boîte de vitesses,
- l'arbre de sortie (GA) de la boîte de vitesses étant en permanence couplé en rotation avec le porte roue planétaire (PT3) du troisième train de roues planétaires (PRS3) et la couronne de train planétaire (H3) du troisième train de roues planétaires (PRS3) pouvant être fixé par l'intermédiaire d'un huitième élément de commutation (SE8) par rapport au boîtier (0),
**caractérisé en ce que**
- l'arbre d'entrée de la boîte de vitesses (GE) est en permanence couplé en rotation à la roue solaire (S2) du second train de roues planétaires (PRS2),
- le premier moteur électrique (EMA) peut être couplé en rotation par l'intermédiaire d'un premier élément de commutation (SE1) à la roue solaire (S1) du premier train de roues planétaires (PRS1) ou est en permanence couplé en rotation à la roue solaire (S1) du premier train de roues planétaires (PRS1),
- la couronne de train planétaire (H1) du premier train de roues planétaires (PRS1) est en permanence couplée en rotation au second moteur électrique (EMB),
- la couronne de train planétaire (H1) du premier train de roues planétaires (PRS1) est en permanence couplée en rotation à la roue solaire (S3) du troisième train de roues planétaires (PRS3) et à la roue solaire (S4) du quatrième train de roues planétaires (PRS4),
- la couronne de train planétaire (H1) du premier train de roues planétaires (PRS1) peut être couplée en rotation par l'intermédiaire d'un second élément de commutation (SE2) avec le porte roue planétaire (PT2) du second train de roues planétaires (PRS2),
- le porte roue planétaire (PT2) du second train de roues planétaires (PRS2) peut être fixé par l'intermédiaire d'un troisième élément de commutation (SE3) par rapport au boîtier (0),
- le porte roue planétaire (PT1) du premier train de roues planétaires (PRS2) est en permanence couplé en rotation à la couronne de train planétaire (H2) du second train de roues planétaires (PRS2), et
- la roue solaire (S1) du premier train de roues planétaires (PRS1) peut être fixée par l'intermédiaire d'un septième élément de commutation (SE7) par rapport au boîtier (0).

2. Boîte de vitesses hybride automatique conforme à la revendication 1, **caractérisée en ce que**
le porte roue planétaire (PT2) du second train de roues planétaires (PRS2) peut être couplé en rotation à l'arbre d'entrée de la boîte de vitesses (GE) par l'intermédiaire d'un quatrième élément de commutation (SE4).

3. Boîte de vitesses hybride automatique conforme à l'une des revendications 1 et 2,
**caractérisée en ce que**
le porte roue planétaire (PT2) du second train de roues planétaires (PRS2) peut être couplé en rotation au premier moteur électrique (EMA) par l'intermédiaire d'un cinquième élément de commutation (SE5).

4. Boîte de vitesses hybride automatique conforme à l'une des revendications 1 à 3,
**caractérisée en ce que**
le porte roue planétaire (PT1) du premier train de roues planétaires (PRS1) peut être couplé au porte roue planétaire (PT2) du second train de roues planétaires (PRS2) par l'intermédiaire d'un sixième élément commutation (SE6).

5. Boîte de vitesses hybride automatique conforme à l'une des revendications 1 à 4,
**caractérisée en ce que**
l'arbre d'entrée (GE) de la boîte de vitesses peut être couplé en rotation au porte roue planétaire (PT4) du quatrième train de roues planétaires (PRS4) par l'intermédiaire d'un neuvième élément de commutation (SE9).

6. Boîte de vitesses hybride automatique conforme à l'une des revendications 1 à 5,
**caractérisée en ce que**
la couronne de train planétaire (H4) du quatrième train de roues planétaires (PRS4) peut être couplée en rotation à l'arbre de sortie (GA) de la boîte de vitesses par l'intermédiaire d'un dixième élément de commutation (SE10).
